# EUROPEAN PATENT APPLICATION

(11) **EP 1 385 359 A1**
(43) Date of publication of application: **28.01.2004**
(21) Application number: 03425478.9
(22) Date of filing: 18.07.2003
(51) Int. Cl.: H05B 41/28, H05B 41/282, H05B 37/02

(54) **Remote controlled electronic ballast for high pressure gas discharge lamps via power line carrier**

(30) Priority: 22.07.2002 IT RM20020388
(71) Applicant: Koroliouk, Dmitri, 00044 Frascati (RM) (IT)
(72) Inventor: Koroliouk, Dmitri, 00044 Frascati (RM) (IT); Volkov, Igor, 00044 Frascati (RM) (IT); Zakarevski, Stanislav, 00044 Frascati (RM) (IT); Dovgalevski, Anatoli, 00044 Frascati (RM) (IT); Karas, Grigori, 00044 Frascati (RM) (IT); Koba, Alexandr, 00044 Frascati (RM) (IT); Rocchi, Alessandro, 00044 Frascati (RM) (IT)

(57) **Abstract**

The present invention belongs to the class of electronic ballasts for ignition, stability and regulation of regimes for high pressure gas discharge lamps which supply to the lamp the current with the frequency different from the one of the first source of power supply. The device is commanded remotely by means of power line signalling.

The invention permits to realize two regimes of the lamp power supply: a) with high frequency alternate current (units - tens of kHz); b) with continuous current with cyclic commutation of polarity. In both cases a continuous or step dimming is provided, through the device working regime variation.

One of original characteristics of the proposed invention is a possibility of an essential reduction of component number and reliability increase by means of exclusion of the power factor corrector and some other modules through their substitution with an original circuit of filtering and power factor correction with the phase number multiplication and the use of 3-phase rectifier bridge.

The present invention permits not only the control (local or remote) of illumination regimes of the lamp but also provides diagnostic function working in dialog regime with an external control unit, by means of modulated signals transmitted in the power-line network.

## Description

### FIELD OF THE INVENTION

The present invention belongs to the class of electronic ballasts for ignition, stability and regulation of regimes for high pressure gas discharge lamps for lighting. In particular, the present invention belongs to the electronic ballasts for metal halide lamps and for high pressure sodium ones which supply to the lamp the current with the frequency different from the one of the first source of power supply.

### BACKGROUND OF THE INVENTION

The metal halide HID and high pressure sodium lamps always find growing field of application in illumination in all the World substituting mercury vapour lamps owing to its better technical-economic characteristics.

Using the electrical network of 220V, 50 Hz (Europe) or 110V, 60 Hz (North America), a traditional system of power supply necessarily contains a current limiting inductance connected in series with the lamp. Otherwise it is impossible to keep a normal and stable work of the lamp which has the well-known "dropping" volt-ampere characteristics. Moreover, it is also necessary a device which generates high voltage impulses for the lamp ignition. The problems relative to such electromagnetic devices are the following :
- Trembling luminosity at the network frequency 50 (60) Hz
- Big dependence of the lamp lighting flow on the variation of power supply tension.
- Strict admitted variation of the power supply tension, respectively of the nominal value for which the ignition and stable functioning of the lamp are possible.
- Very low level of the power factor which implies the necessity of its correction by means of a power factor correction condenser.
- Big mass and dimensions of electromagnetic device
- Low efficiency coefficient implies the relative losses of electrical energy along the infrastructures (network, transformation cabins, underground cables etc.)
- Impossibility of the lamp lighting flow control .

A lot of the above mentioned problems are solved using electronic devices for ignition and regulation, called electronic ballasts (EB). Furthermore the EBs permit to prolong the lamp life duration, to increase its lighting output or alternatively, to decrease its energetic consumption providing, in addition, a comfortable lamp lighting flow (non-trembling luminosity). Now the EBs have intensive development and become to be competitive in the costs, showing many advantages in many other characteristics.

A typical scheme of electronic ballast is described in the Application Note AN-1022 of International Rectifier : "IR259 : 250 W Metal Halide HID Dimmable Ballast" by T.Ribarich (www.irf.com). The main modules in this scheme are:
entering filter, rectifier, corrector of the power factor, inverter and the ignition circuit of the lamp.

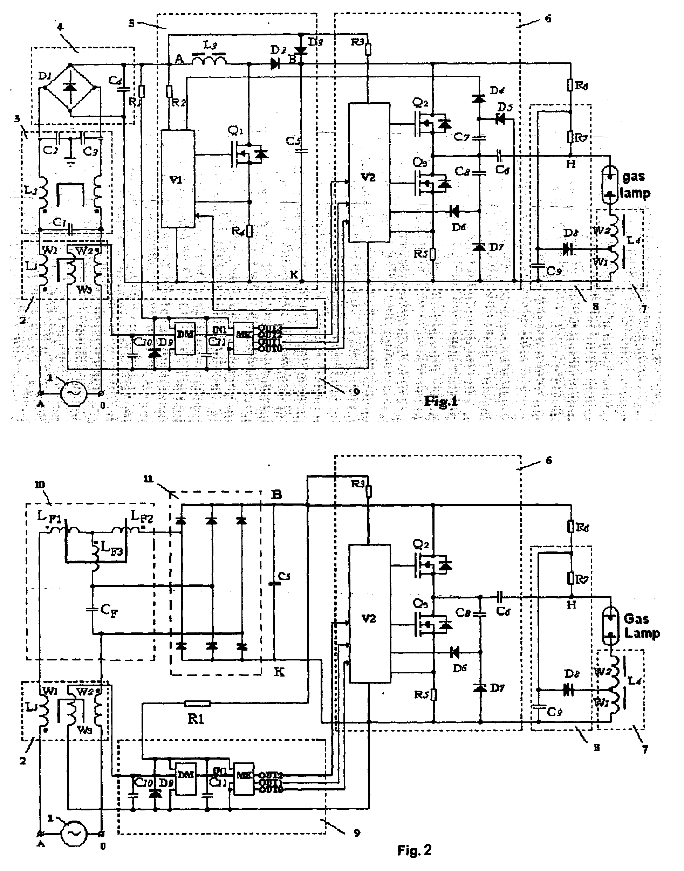

The inverter provides the power supply of the lamp with alternate current at high frequency (several tens of kHz) as well as the lamp current regulation.
Despite of indisputable advantages of EBs in comparison to the traditional electromagnetic devices, the schemes of Electronic Ballasts up to now, have a number of disadvantages which limit their large application. In particular, the above mentioned scheme (AN-1022) does not guarantee the electrical discharge stability using high frequency as well as does not provide the lamp functionality with continuous current with cyclic commutation of polarity. In addition this scheme requires a supplementary couple of wires for the lamp luminosity control and a big 2-stage inlet filter which implies a big mass and large dimensions of the device. In order to overcome the above mentioned disadvantages, a series of improving schemes has been proposed among which the nearest device to those claimed in the present document is described in the Patent USA n. 6.225.755 (Patent US 6,225,755, B1, May 2001 : "High power factor electronic ballast with simplified circuit technology", Int. Cl.⁷ H05B 41/16).
Nevertheless, despite a series of advantages of EB described in this Patent (simplicity of the power part, possibility of the lamp stability using continuous current with cyclic commutation of polarity) a serious of essential disadvantages of the devices takes place , namely :
- The outlet capacitors of the converter (C₁ₐ and C_{1b} in the Fig. 2 of the Patent description) must have big capacity hence large dimensions and high cost. Furthermore they are subjected to high jumps and pulsations of the tension which implies their short duration of regular service.
- The drivers of inlet and outlet converters must have complex, very specialized (non standard) circuits which implies their reduced reliability and high cost.
- In order to suppress the power line harmonics, the device must have a powerful inlet filter which implies mass and dimension increment of the device.
Therefore, it is evident the necessity of the improvement of functional characteristics, of reliability, of the device mass / dimensions and of the cost of the Electronic Ballasts.

### THE INVENTION SUMMARY

The present invention contains a series of the modules used in the known Electronic Ballasts, but is based on original algorithm and moreover, proposes a series of new modules which permit to improve energetic and functional properties of the Electronic Ballasts.
The power supply of the proposed EB is based on a special transformator-reactor (TR) with three windings and a filter suppressor of electromagnetic interferences. The main function of the TR is to separate the power supply current from the control signals of the lamp regimes and of diagnostics. The rectified current from the bridge supplies the inverter and the power factor corrector. The lamp ignition is realized by a special circuit of ignition realized as generator of impulses or as resonance circuit.

A special winding of the TR provides the receiving, through the power line wires, of the modulated signals of control commands on an internal control unit which provides their de-codification and their dispatch to the power factor correction driver and to the inverter driver guaranteeing in such a mode the control of the lamp working regimes.
The present invention permits to realize two regimes of the lamp power supply: a) with high frequency alternate current (units - tens of kHz); b) with direct current with cyclic commutation of polarity. In both cases a continuous or step dimming is provided, through the EB working regime variation.
The present invention permits also to realize a semi-bridge or a bridge scheme of the inverter and in any case it is possible to use the ignition circuit realized as generator of impulses or as resonance circuit.
One of the original characteristics of the proposed device in the present document is a possibility of an essential reduction of the component number and the reliability increase by means of exclusion of the power factor corrector and some other modules through their substitution by an original circuit of filtering and of the power factor correction with the phase number multiplication and the use of 3-phase rectifier bridge.
The present invention permits not only the control (local or remote) of illumination regimes of the lamp but also provides diagnostic function working in dialog regime with an external control unit.
All the electrical schemes reported in the figures 1 - 5, 8 and 9 represent the principal but not exclusive schemes of electronic ballasts claimed in the present document. Therefore, the innovations are contained and claimed in singular functional modules marked by underlined numbers in the figures 1 - 5, 8 and 9. Hence, the eventual compositions of the above mentioned modules in different manners of those reported in the figures does not present a new figure with respect to those claimed in the present invention.

### BRIEF DESCRIPTION OF THE FIGURES

Fig. 1illustrates the electrical general circuit of the Electronic Ballast according to the Claims 1 and 2.
Fig. 2 illustrates the electrical general circuit of the Electronic Ballast according to the Claims 3 and 4.
Fig. 3 illustrates the electrical general circuit of the Electronic Ballast according to the Claims 5 and 6.
Fig. 4 illustrates the electrical general circuit of the Electronic Ballast according to the Claim 7.
Fig. 5 illustrates the electrical general circuit of the Electronic Ballast according to the Claim 9.
Fig. 6 reports the wave form plotting of the signal generated by the Electronic Ballast circuit illustrated in Fig. 3 and in Fig. 5.
Fig. 7reports the wave form plotting of the signal generated by the Electronic Ballast circuit illustrated in Fig. 4.
Fig. 8 illustrates the electrical general circuit of the Electronic Ballast according to the Claims 10 and 11.
Fig. 9 illustrates the electrical general circuit of the Electronic Ballast according to the Claim 12.
Fig. 10 reports tension and current diagrams of the Electronic Ballast circuit illustrated in Fig. 9.

### DETAILED DESCRIPTION OF THE FIGURES

Note : The underlined numerical sequences are all referred to the various modules contemplated in the annexed figures.

Fig. 1 illustrates the electrical general circuit of the Electronic Ballast according to the Claim 1. The mono-phase power supply current at 50 (60) Hz arrives to the windings W1 and W2 of a special transformator-reactor (TR) 2 disposed on the common magnetic core and connected in series respectively to the power line wires 1. The inductance L1 of the windings W1 and W2 is not big and improves the harmonic content of the main frequency of the power supply source 1. TR also contains a special winding W3 disposed on the same magnetic core. By the coherent connection of the windings W1 and W2, in the winding W3, the control signals present in the power line are induced by means of the following circuit: phase A - W1 - C1 - W2 - 0. These signals manage the work of the internal control module 9. TR is connected, in a standard mode, through the windings W1 and W2, to the high frequency filter of electromagnetic interferences 3; the output of the filter is connected with the diode rectifier bridge 4 with a smoothing capacitor C4 in its output diagonal.
The tension rectified and smoothed by the capacitor C4 supplies all the principal modules of the Electronic ballast: the inverter 6, the module of power factor corrector 5, the module of the lamp ignition 8 and the internal control module 9.
When the EB is powered, the rectified tension appears on the capacitor C4, the filtering capacitor C5 is charged, through the valve D2, up to the level of the amplitude of the power supply source 1. By the resistor R3, the start power is supplied on the driver V2 of the inverter 6 which generates control impulses of the keys Q2 and Q3 of the mentioned semi-bridge type inverter. By means of the capacitors C7, C8, the diodes D4, D6 and the stabilitrons D5, D7 (Zener diodes) a stabilized tension is formed on the driver V1 of the Power Factor Corrector (PFC) 5 and on the driver V2 of the inverter 6.
The inverter and then the PFC begin to work at high working frequency but in idle regime because the lamp is not yet started. For its ignition the second transformator-reactor 7 with two windings W1 and W2 with common magnetic core and non-magnetic gap is utilized. By means of the resistor R6 the power is supplied to the ignition module 8 which contains accumulating capacitor C9, resistor R7 and dinistor D8. When the tension on the capacitor C9 reaches the closing level of the dinistor D8, this one closes the ignition circuit and the capacitor C9 is discharged into the winding W1 of the transformator-reactor 7. The high tension induced in the winding W2, sparks through the gas gap initializing the gas discharge current between the lamp electrodes, so the lamp is "flamed up". At this moment the tension at the point H of the direct current drops to the nominal working tension of the lamp (that is under the closing level of the D8) which stops the generation of ignition impulses.
The control of the lamp working regimes is carried out by the internal control module 9 which receives the modulated control signals from the power line. The input winding W3 of the TR 2, together with the capacitor C10, establish a resonance circuit of the signals receiver tuned in the carrying frequency of transceiver of the control commands and of the diagnostics. The demodulator (DM) provides fine tuning of the carrying frequency and detects the useful signal IN1.
This signal, supplied to a microcontroller (MK), contains the following information: The address of EB device, the service/control information (synchronization, start / stop bit, bit of confirm, bit of request TX / RX, error control code etc.) The microcontroller is equipped with a necessary number of output pins. For example, the microcontroller illustrated in the Fig. 1 contains 4 output pins where the output signals OUT3, OUT2 are used for switching on / off of the driver V1 of the corrector PFC 5 and of the adjustable high-frequency inverter 6 while the output signals OUT1, OUT0 control the inverter power, hence the lamp luminosity.

Fig. 2 illustrates the possibility of an essential simplification of the Electronic Ballast with significant increasing of its reliability through the substitution of the modules 3, 4 and 5 with the modules 10 and 11. The module 10 represents a passive filter of the harmonics higher than the power current (3^{rd}, 5^{th}, 7^{th} etc.) of the main frequency absorbed by the EB from the power line. This module has a mono-phase input and a three-phase output connected with a 6 diodes rectified bridge with an outlet smoothing capacitor C5. The module 10 contains an inductor with 3 windings with inductances LF1, LF2 and LF3 on a common magnetic core with non magnetic gap having a capacitor CF. The values of the above mentioned inductances and capacity are selected by the minimization criteria of the parameter THD (Total Harmonic Distortion) of the current absorbed from the mono-phase power supply source. Owing to the suppression of the higher harmonics and to the cos ϕ improvement for the main harmonic, the traditional Power Factor Corrector 5 is not any more necessary. Moreover, by means of suitable settings, the module 10 can play also the role of high frequency filter and hence the module 3 is not any more necessary. The rectifier bridge 11 achieves the important reduction of the rectified current pulsations which permits to apply a more compact and economic smoothing capacitor.
The device provides functionality (discharge) of the lamp powered by alternate current with adjustable power output through variation of the inverted alternate current. It is known that the working stability and the efficiency of electrical energy transformation into the lighting energy is higher using direct current for the lamp powering. But, in order to provide the lamp life duration at acceptable level, it is necessary to provide periodic commutation of polarity of the lamp powering.

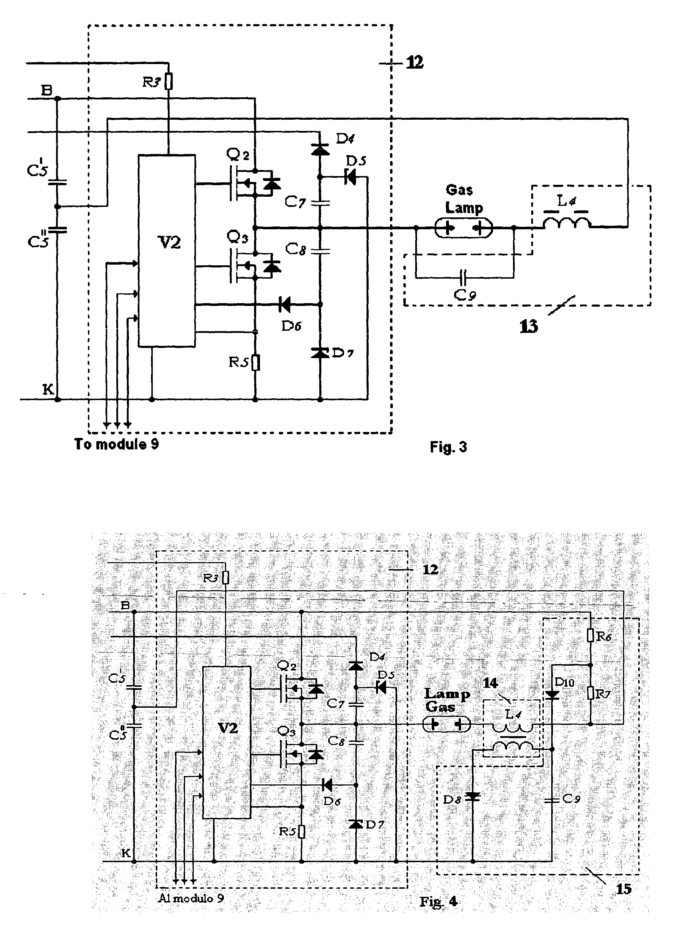

Fig. 3 represents the variant of the Electronic Ballast in which the smoothing capacitor C5 is divided into two capacitors C5' and C5" connected in series. Such a scheme represents a semi-bridge inverter 2 having in its power diagonal two capacitors C5' and C5" and having in its charge diagonal two keys Q1 and Q2. The control driver of these keys must execute the following functions:
- High Carrier frequency generation (HCG);
- Stabilization, of the direct current of the lamp by means of a Pulse-Width Modulation DC Stabilizer (SDC);
- Periodic commutation of polarity of the lamp powering (PCP).
After powering of this device, the driver V2 wakes-up, the HCG generates impulses of control of the keys Q2 and Q3 of the inverter 2 with the frequency defined by the resonance circuit L4C9. When the tension in the resonance circuit becomes higher than the level of the lamp ignition, the unit HCG of the driver emits control impulses of the keys for the lamp current stabilization. Here, in the period of positive semi-wave formation of the lamp current, the key Q2 works as SDC regulator whereas the key Q3 works as a diode. Vice versa, in the period of negative semi-wave formation of the lamp current, the key Q2 works as a diode whereas the key Q3 works as SDC regulator.

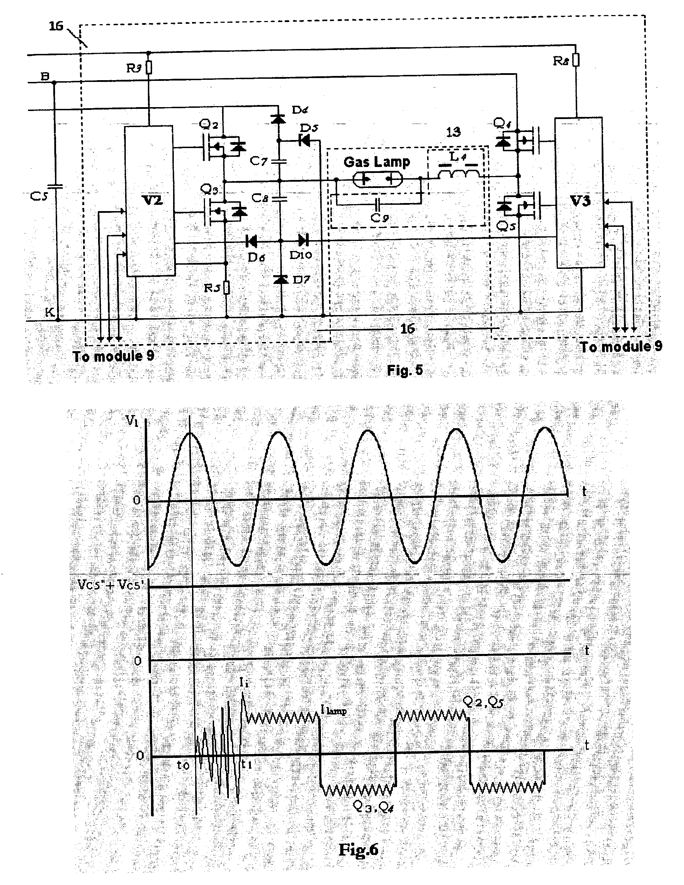

The inverter function is carried out by alternator PCP of the driver V2. The illustration of the situation on the lamp electrodes, during ignition and work of the lamp, is reported in diagram Fig.6 in which, at the instant t₀, the tension in the resonance circuit L4C9 increases up to the level of the lamp ignition occured at the instant t₁ after which the working current lₗₐₘₚ is stabilized.

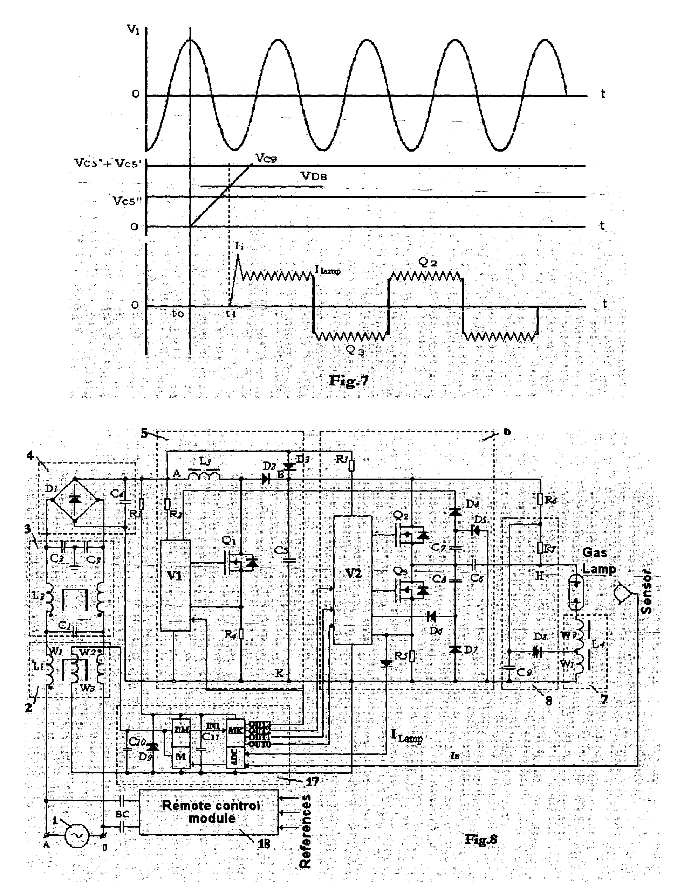

Fig. 4 represents the variant of the Electronic Ballast as in the previous paragraph but with the difference that it uses a simplified driver V2 and the ignition circuit which is not of resonance type but represents an ignition generator of high tension impulses having the modules 14 and 15. When the tension on the capacitor C9 reaches the level of closure of the dinistor D8, it closes the circuit and discharges the capacitor C9 on the winding W1 of the transformator-reactor 14. The high tension, induced in the winding W2, sparks through the gas gap initialising the gas discharge current between the lamp electrodes, so the lamp is "flamed up". At this moment, the tension at the point H of the direct current drops to the nominal working tension of the lamp. The action of the tension divisor R6R7 limits the charge tension on the capacitor C9 to a value under the closing level of the dinistor D8 which stops the generation of ignition impulses. The diagram of the circuit work is reported in Fig. 7 where V_{C9} and V_{D8} are correspondingly the charge tension of capacitor C9 and the tension of closure of dinistor D8. At the instant t₁ the lamp ignition occurs with stabilizing of a working current lₗₐₘₚ with a programmable periodic commutation of polarity. This scheme implies that the driver V2 can be simplified by cutting the function of the resonance frequency carrier for the lamp ignition as for the scheme presented in Fig. 3.

Fig. 5 represents the variant of Electronic Ballast (Claim 9) where the inverter is realized by a bridge scheme having two drivers V2 and V3. The driver V2 generates the resonance frequency carrier for the lamp ignition defined by the circuit L4C9 and also stabilizes the lamp powering current.
The diagram of the lamp ignition and of the lamp working current generation is reported in the above described Fig. 6. The bridge type circuit of EB is preferable for the lamps (or sets of lamps) of high power.

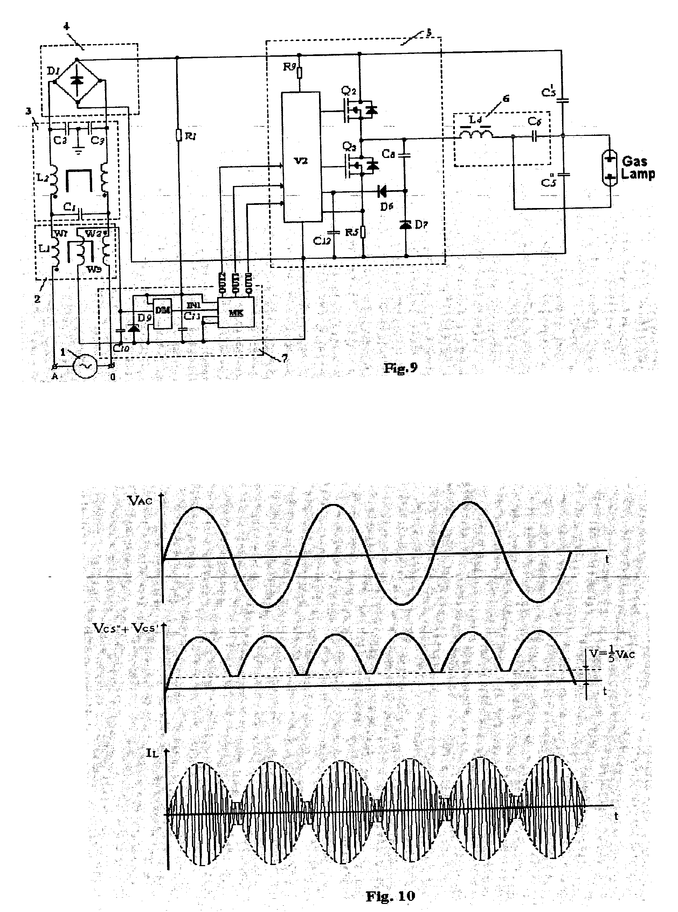

Fig. 8 illustrates the electrical general circuit of the Electronic Ballast with control and diagnostics units according to the Claims 10 and 11.
Every current inverter (Fig. 1 - 5) contains a shunt - resistor R5. From this resistor the signal lₗₐₘₚ is transmitted, through a divisor diode, at an Analog-to-Digital Converter (ADC). In the same way the signals Iₛ are transmitted from a photo-sensor (Sensor). These and other diagnostics are then digitalized, codified by the modulator and transmit, at the power line, by the winding W3 of the input transformator reactor, to a remote control and diagnostics module. Such information will be received and de-codified in the remote diagnostics unit 18 characterizing the working regimes and the luminosity of the lighting point. The control functions are described below (Fig. 1).

Fig. 9 illustrates the possibility of simplification of the Electronic Ballast according to the Claims 1 and 2, by its working regime modification and by simplification of some of its functional modules. It is realized by skipping the Power Factor Correction with the Driver V1, and moreover, the values of the divisor capacitor of the rectified tension C5', C5" are chosen by the criteria of the maximal admitted pulsations of the rectified tension (Cp ≈ 80 ÷ 90 %, see Fig. 10). Such conditions provide the quasi sinusoidal form of the current absorbed by the EB with cos ϕ close to 1. The integration between the lamp and the EB is realized applying the current transformator based on the circuit L4C6 of the module 6 (Boucherot scheme). By the resonance effect, a sharp tension increase is verified on the elements LC before the lamp ignition which implies its start and pass in the working regime. The relative oscillograms are reported in Fig. 10. The supercharge protection of the resonance circuit is realized by means of the current control on the inverter by reading of signals from the terminals R5 and their supply at the driver V2.

## Claims

1. The electrical general circuit of the Electronic Ballast for ignition, regulation, control and diagnostics of gas discharged lamps which supplies to the lamp the current with the frequency different from the one of the first source of power supply containing the following modules:
Inlet transformator - reactor (TR), having at least two main windings and one winding of control and signalisation on common magnetic core;
An electromagnetic interferences filter having inductive and capacitive reactive elements whose inlet terminal is connected to the outlet terminal of the mentioned transformator - reactor TR;
Diode rectifier bridge whose inlet AC terminal is connected to the above mentioned electromagnetic interferences filter and whose outlet terminal DC is connected to the first smoothing capacitor;
Power factor corrector (PFC) having the first driver and at least one transistor switch, a diode, an inductor and the second smoothing capacitor. The inlet terminal of the PFC is connected to the first smoothing capacitor;
An inverter having the second driver, at least two transistor keys, ballast capacitor and two Zener diodes. The inlet terminal of the inverter is connected to the above mentioned second smoothing capacitor; the mentioned Zener diodes are connected, respectively, through ordinary diodes, to powering points of the first and of the second driver and the gas discharge lamp is connected in series to a capacitor-divisor;
Outlet transformator - reactor (TR), having at least two windings on common magnetic core connected in series between them, to the gas discharge lamp and to one of the above mentioned windings connected to the mentioned second smoothing capacitor;
Ignition unit (starter) having resistor charge circuit, accumulating capacitor and dinistor, where the dinistor is connected to the positive terminal of the mentioned accumulating capacitor and to the common point of the mentioned two windings of the mentioned outlet transformator - reactor;
Internal control unit consisting of receiver of the modulated signal, demodulator and programmable control signals with a number of outcomes. The inlet terminal of the unit is shunted with the resonance capacitor and the outlet terminals are connected to the above mentioned first and second drivers.

2. The electrical general circuit of the Electronic Ballast according to the Claim 1 in which the "origin" of the first winding of the inlet transformator - reactor and the "end" of the second winding are connected to the primary power supply source; the "end" of the first winding and the "origin" of the second winding are connected with the filter of electromagnetic interferences; the terminals of the mentioned winding of control and signalisation are connected to the resonance capacitor of the mentioned internal control unit.

3. The electrical general circuit of the Electronic Ballast according to the Claims 1 and 2 in which, in substitution of the mentioned filter of electromagnetic interferences, of the mono-phase diode rectifier bridge and of the PFC, a Universal Harmonics Filter (UHF) and a 3-phase rectifier bridge are used. This bridge is connected in the following mode: the DC output of the mentioned 3-phase rectifier bridge is connected to the mentioned second smoothing capacitor and the income of the mentioned UHF is connected to the mentioned inlet transformator-reactor.

4. The electrical general circuit of the Electronic Ballast according to the Claim 3 in which the mentioned UHF contains at least one capacitor and at least three windings on common magnetic core with the "star" connection between them and the external connections made in the following mode: the inlet terminal of the first winding L_{F1} is connected to the first outlet wire W₁ of the mentioned transformator-reactor, the second winding outlet terminal L_{F2} is connected to the first wire AC of the mentioned 3-phase rectifier bridge, the terminal of the third winding L_{F3} is connected to the second AC wire of the mentioned 3-phase rectifier bridge. The mentioned capacitor C_{F} is connected with the second and third AC wires of the mentioned 3-phase rectifier bridge and the third wire AC of the mentioned 3-phase rectifier bridge is connected with the second outlet terminal W₂ of the mentioned transformator-reactor.

5. The electrical general circuit of the Electronic Ballast according to the Claims 1 - 4, in which the mentioned second smoothing capacitor is composed by two capacitors connected in series and the mentioned inverter is realized by a semi-bridge scheme with the powering diagonal connected in series to the mentioned two capacitors and with the charge diagonal connected to the gas discharge lamp.

6. The electrical general circuit of the Electronic Ballast according to the Claim 5, in which a supplementary multi-functional inductance is used, connected in series to the gas discharge lamp and a supplementary ignition capacitor connected in parallel with the mentioned gas discharge lamp. In this scheme, the driver V2 works in two regimes: 1) the lamp ignition; 2) the working regime of the lamp.

7. The electrical general circuit of the Electronic Ballast according to the Claim 5, in which the second winding of the ignition impulse transformator is connected in series to the gas discharge lamp, the first winding of the outlet transformator-reactor is connected to the mentioned dinistor having accumulating capacitor and charge resistance chain.

8. The electrical general circuit of the Electronic Ballast according to the Claims 5 - 7, in which the mentioned second driver is realized by the scheme able to provide at least three control functions of the transistor keys of the mentioned inverter: generation of high frequency carrier, stabilisation of the impulses width of the lamp powering (Pulse-Width Modulation DC Stabilizer) and periodic polarity commutation of the direct lamp current.

9. The electrical general circuit of the Electronic Ballast according to the Claims 1 - 4, in which the mentioned inverter is realized by a bridge scheme, having the second couple of transistor keys connected in series to the powering diagonal, connected to the second smoothing capacitor and to the charge diagonal, through the reactor, to the gas discharge lamp. The third driver of the mentioned couple of transistor keys is realized by a scheme able to play at least two functions of the mentioned keys control: generation of high frequency carrier and periodic polarity commutation of the direct lamp current.

10. The electrical general circuit of the Electronic Ballast according to the Claims 1 - 9, in which the mentioned internal unit of control is equipped by a supplementary module of the lamp regimes diagnostics, of its luminosity and of general functional control of Electronic Ballast.

11. The electrical general circuit of the Electronic Ballast according to the Claim 10, in which the ADC and the power line transceiver are used for communication and signalisation between the lamp, the luminosity sensors, the energetic consumption sensors and the remote control and diagnostics modules.

12. The electrical general circuit of the Electronic Ballast according to the Claims 1 - 6, in which a semi-bridge inverter is used, by means of a resonator LC in the charge diagonal while in the powering diagonal is connected directly to the rectifier bridge.
